# EUROPÄISCHE PATENTSCHRIFT

(11) **EP 1 454 731 B1**
(45) Veröffentlichungstag und Bekanntmachung des Hinweises auf die Patenterteilung: **03.05.2006**
(21) Anmeldenummer: 04005101.3
(22) Anmeldetag: 04.03.2004
(51) Int. Cl.: B29C 45/26, B29C 45/44, E05B 65/20

(54) **Verfahren zum Herstellen eines Türgriffs für Fahrzeuge**
Method for producing a door handle for vehicles
Procédé pour produire une poignée de porte pour véhicules

(30) Priorität: 05.03.2003 DE 10309446
(43) Veröffentlichungstag der Anmeldung: 08.09.2004
(73) Patentinhaber: Huf Hülsbeck & Fürst GmbH & Co. KG, 42551 Velbert (DE)
(72) Erfinder: Velicanin, Mensur, 42555 Velbert (DE); Hübner, Raimund, 42111 Wuppertal (DE); Rohlfing, Manfred, 42549 Velbert (DE); Müller, Ralph, 42549 Velbert (DE)
(74) Vertreter: Mentzel, Norbert

(56) Entgegenhaltungen:
- EP-A- 1 067 257
- WO-A-03/050371
- US-A- 3 152 365
- US-A- 5 690 884
- PATENT ABSTRACTS OF JAPAN Bd. 0093, Nr. 26 (M-441), 21. Dezember 1985 (1985-12-21) & JP 60 161116 A (KINJIYOU GOMU KK), 22. August 1985 (1985-08-22)

## Beschreibung

Es gibt Verfahren verschiedener Art zum Herstellen eines Türgriffs. Bei einem ersten Verfahren (DE 100 01 010 A1) zur Gewichts- und Materialersparnis beim Spritzgießen wird ein beidendig geschlossener Hohlraum im Griffschaft erzeugt. Der Griffschaft kann mehrlagig ausgebildet sein, wozu ein sogenanntes Zwei-Kunststoff-Spritzverfahren verwendet wird. Das Hohlrauminnere des Griffschafts ist unzugänglich und kann nicht zur Aufnahme einer Steuerelektronik genutzt werden.

Bei einem anderen Verfahren (DE 199 22 222 C2) ist es bekannt, am einen Ende des Griffschafts eine Ausnehmung anzuordnen, in welche eine Steuerelektronik eingesteckt und an ein Kabel angeschlossen wird, welches den Griffschaft durchsetzt. Vor die Öffnung der Ausnehmung wird dann ein Stopfen gesetzt, welcher mit einem zur Betätigung des Türschlosses dienenden Ansatz versehen ist. Am gegenüberliegenden Ende des Griffschafts wird ein gesondert hergestellter Lageransatz angekuppelt, der elektrische Abgänge trägt und mit diesen beim Kuppeln an eine den Griffschaft durchziehende elektrische Leitung angeschlossen wird. Die mehrteilige Ausbildung des Türgriffs ist zeit- und kostenaufwendig.

Preiswerter ist demgegenüber das im Oberbegriff von Anspruch 1 genannte Verfahren, dass als Griffschaft ein durchgehendes Rohr mit einem Rohreingang am einen Griffende und einem Rohrausgang am anderen Griffende erzeugt wird. Bei dem bekannten Verfahren dieser Art (EP 1 067 257 A1) besitzt die Rohrwand im Griffendbereich einen seitlichen Durchbruch, in welchen später ein Taster eingebaut wird. Der Taster ist über eine elektrische Anschlussleitung mit einer Steuerelektronik verbunden, die durch den Rohreingang ins Rohrinnere eingeführt wird. Dabei ragt ein an die Steuerelektronik angeschlossenes Kabel aus dem Rohrausgang wieder heraus. Einstückig mit dem Rohr ist lediglich der Lageransatz ausgebildet. Der gegenüberliegende Betätigeransatz ist in einen Deckel integriert, welcher nach dem Einführen der Steuerelektronik den Rohreingang verschließen soll. Abgesehen von der durch die Zweiteiligkeit kostenaufwendigeren Herstellung hat dieser bekannte Türgriff vor allem den Nachteil, dass das Rohr eine ungleichförmige Rohrwandstärke aufweist. Dünnere Rohrwandbereiche führen nämlich zu sogenannten "Einfallstellen" am Griffschaft, welche das gute Aussehen des fertigen Türgriffs erheblich beeinträchtigen. Mit dem bekannten Verfahren konnten keine Türgriffe hoher Qualität hergestellt werden.

Der Erfindung liegt die Aufgabe zugrunde, ein zuverlässiges Verfahren zum Herstellen eines Türgriffs der im Oberbegriff von Anspruch 1 genannten Art zu entwickeln, welches die preiswerte Herstellung von Griffen hoher Qualität ermöglicht. Dies wird durch die im Anspruch 1 angegebenen Maßnahmen erreicht, denen folgende besondere Bedeutung zukommt.

Zur Herstellung des rohrförmigen Hohlraums fährt ein Hauptschieber in die Spritzgussform ein, welcher entsprechend dem Verlauf des Griffschafts gekrümmt ist. Er weist eine Bananen-Form auf. Dabei grenzt der eingefahrene Hauptschieber mit seinem Fußstück einen Abzweigungsraum in der Spritzgussform ein, welche das negative Profil des Betätigeransatzes aufweist. Mit dem Kopfstück des Hauptschiebers wirkt in besonderer, noch näher zu beschreibender Weise ein Hilfsschieber zusammen, der seinerseits quer zum Hauptschieber in die Spritzgussform einfährt und dabei seiner Flanke den zur Herstellung des Lageransatzes dienenden Nebenraum begrenzt. Das besondere Zusammenwirken vom Haupt- und Nebenschieber besteht in Folgendem.

Das Kopfstück vom Hauptschieber besitzt Kuppelflächen und der Hilfsschieber weist an seinem Stirnende Gegenkuppelflächen auf. Beim Einfahren der beiden Schieber kommen die Kuppelflächen mit den Gegenkuppelflächen in Eingriff. Dadurch wird beim Spritzgießen der Hauptschieber vom Hilfsschieber formschlüssig gehalten und exakt lagegerecht in der Form abgestützt. Diese Wechselwirkung von Haupt- und Hilfsschieber sorgt dafür, dass der entstehende Formling ein Rohr mit einer über die ganze Griffschaftlänge definierten Rohrwandstärke ist. Die Rohrwandstärke ist vorzugsweise über die ganze Griffschaft-Länge konstant. Abgesehen von der exakten Rohrwandstärke sind sowohl der Lageransatz als auch der Betätigeransatz mit dem Rohr einstückig. Man erhält also nicht nur einen Griff hoher Qualität, sondern wegen der einstückigen Herstellung aller Griffteile auch eine sehr preiswerte Herstellung des Türgriffs.

Weitere Maßnahmen und Vorteile der Erfindung ergeben sich aus den Unteransprüchen, der nachfolgenden Beschreibung und den Zeichnungen. In den Zeichnungen ist das erfindungsgemäße Verfahren anhand des Formwerkzeugs, des darin erzeugten Formlings und schließlich anhand des fertigen Türgriffs näher erläutert. Es zeigen:
- Fig. 1: in perspektivischer Darstellung den fertigen Formling des erfindungsgemäßen Verfahrens mit einem über eine Teillänge des Griffschafts sich erstreckenden Ausbruch, der den inneren Aufbau besser zeigt,
- Fig. 2, 3 + 4: das zur Herstellung des Formlings von Fig. 1 dienende Spritzgusswerkzeug in drei aufeinanderfolgenden Verfahrensstufen,
- Fig. 5, 6, 7+9: einen Längsschnitt durch den bereit in Fig. 1 gezeigten Formling in verschiedenen Montagephasen zur Herstellung eines "intelligenten Türgriffs" und
- Fig. 8: einen Querschnitt durch den in Fig. 7 gezeigten Türgriff längs der Schnittlinie VIII - VIII.

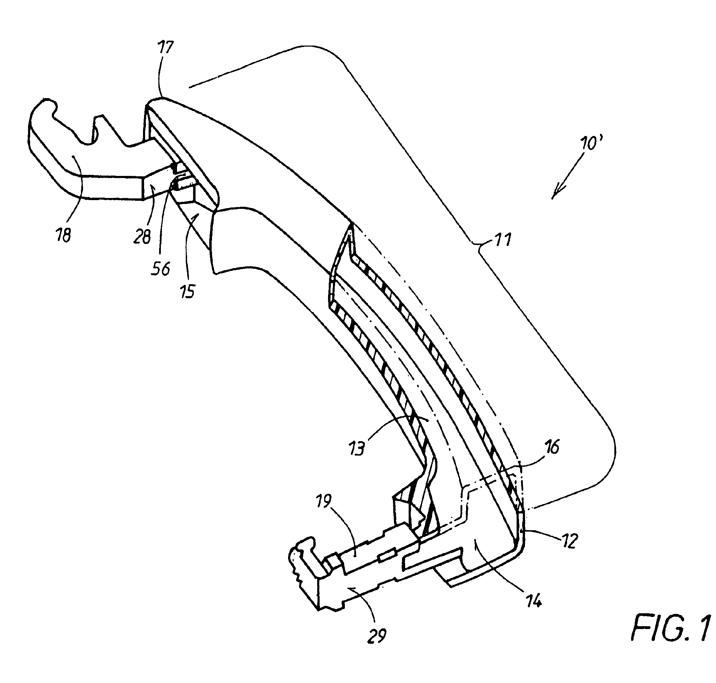

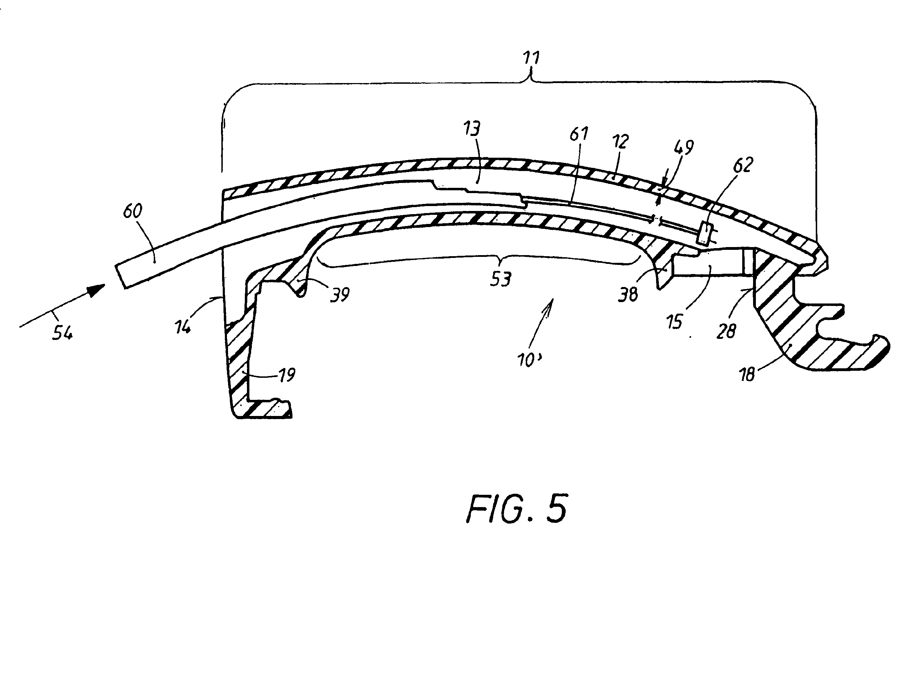

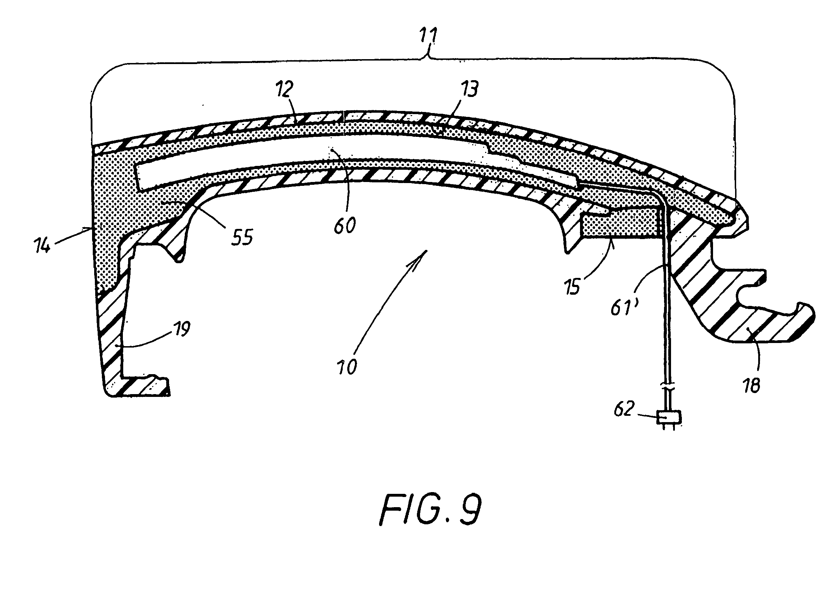

Wie aus Fig. 1 und 9 zu ersehen ist, besitzt der fertige Türgriff 10 bzw. der ihn erzeugende Rohling 10' einen Griffschaft 11, der als Rohr 12 ausgebildet ist. Das Rohrinnere 13 ist sowohl durch einen Rohreingang 14 an einem Griffende 16 als auch durch einen Rohrausgang 15 am gegenüberliegenden Griffende 17 zugänglich. Zur Lagerung des Türgriffs 10 an der Tür dient ein Lageransatz 18. Wie aus Fig. 5 hervorgeht, grenzt der Lageransatz 18 an den Rohrausgang und ragt mit dem Endbereich seiner Innenfläche 28 in den Rohrausgang 15 hinein.

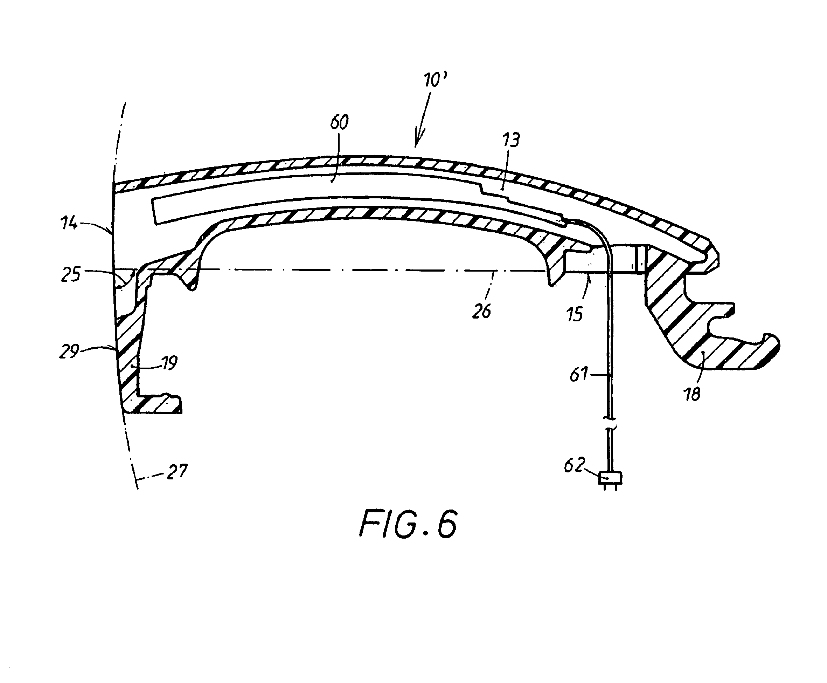

Am gegenüberliegenden Griffende 16 ist am Rohr 12 ein Betätigeransatz 19 angeformt. Wie aus Fig. 6 zu entnehmen ist, weist der Betätigeransatz 19 eine bogenförmig verlaufende Außenkante 29 auf, die im wesentlichen in der gleichen Fläche 27 angeordnet ist, wie das Stirnende des Rohreingangs 14. Die Fläche 27 ist kreisbogenförmig gestaltet, wobei der zugehörige Kreismittelpunkt etwa an der die Drehung des Türgriffs bestimmenden Lagerstelle im Lageransatz 18 angeordnet ist. In Fig. 6 ist strichpunktiert auch eine Verlängerung der Ebene 26 des Rohrausgangs 15 eingezeichnet. Wie daraus ersichtlich, verläuft der Rohrausgang 15 quer zum Rohreingang 14, was dort durch einen Winkel 25 veranschaulicht ist. Dieser Winkel 25 ist im wesentlichen ein rechter Winkel.

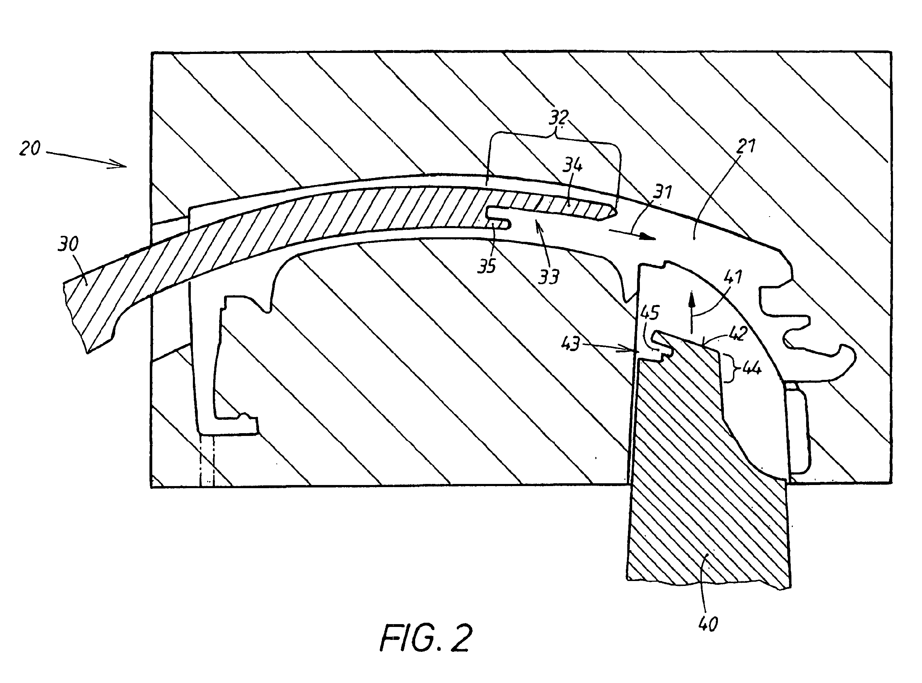

Zur Herstellung des Rohlings dient eine aus Fig. 2 erkennbare Spritzgussform 20 mit einer Kavität 21, in welche einerseits ein Hauptschieber 30 und andererseits ein Hilfsschieber 40 im Sinne der aus Fig. 2 ersichtlichen Pfeile 31, 41 einfahren. Die Einfahrbewegungen 31, 41 kreuzen sich und stehen im Kreuzungspunkt im wesentlichen senkrecht zueinander. Das Kopfstück 32 vom Hauptschieber 30 und der Stirnbereich 42 vom Hilfsschieber 40 sind in besonderer Weise ausgebildet und wirken miteinander zusammen. Am Kopfstück 32 befinden sich Kuppelflächen 33, während im Stirnbereich 42 dazu komplementäre Gegenkuppelflächen 43 aufweist.

Die Kuppelflächen 33 bestehen aus einem in Richtung des Hauptschiebers 30 gekrümmt weiter verlaufenden Verlängerungssteg 34 und aus einem dazu parallelen, kurzen Haltefinger 35. Die Gegenkuppelflächen 43 befinden sich an einem in Einfahr-Richtung 41 des Hilfsschiebers 40 weisenden Vorsprung 44, der einen Haken mit einer quer dazu verlaufende Hakenöffnung 45 besitzt.

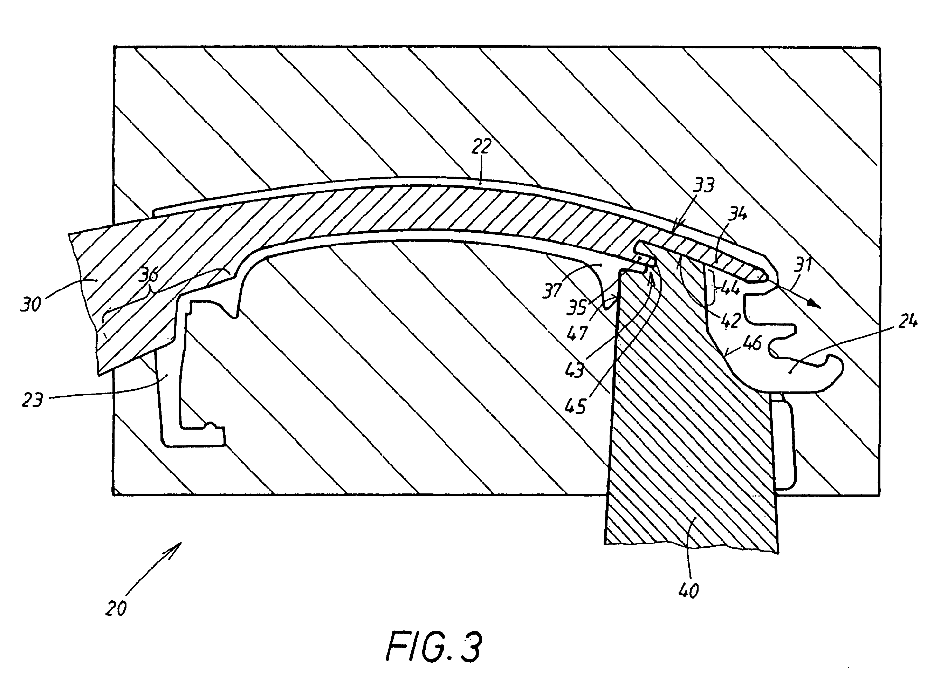

Fig. 3 zeigt die nächste Phase. Der Vorsprung 44 vom Schieber 40 ist an die Seitenfläche des Verlängerungsstegs 34 vom Hauptschieber 30 gestoßen. In der letzten Phase der Einfahrbewegung 31 entsteht dadurch eine Führungswirkung für den Hauptschieber 30. Am Ende dieser Einfahrbewegung 31 sind der am Hauptschieber 30 sitzende Haltefinger 35 in die Hakenöffnung 45 und der Hakenkopf in den Abstandsraum zwischen dem Verlängerungssteg 34 und dem Haltefinger 35 eingedrungen. Die Kuppel- und Gegenkuppelflächen 33, 43 sind in festem Eingriff miteinander. Dadurch wird der Hauptschieber 30 vom Hilfsschieber 40 formschlüssig gehalten und lagegerecht in der Kavität der Spritzgussform 40 abgestützt.

Wie Fig. 3 zeigt, entsteht dadurch in der Form 20 im Umfangsbereich des Hauptschiebers 30 ein exakt definierter rohrförmiger Hohlraum 22. Das Fußstück 36 des Hauptschiebers 30 grenzt in der Kavität der Spritzgussform einen Abzweigraum 23 ab, während der Hilfsschieber 40 mit seiner einen Flanke 46 einen Nebenraum 24 begrenzt. Mit einer Gegenflanke 47 grenzt der Hilfsschieber 40 einen zum Nebenraum 24 gegenüberliegenden Gegen-Nebenraum 37 in der Kavität der Spritzgussform 20 ein.

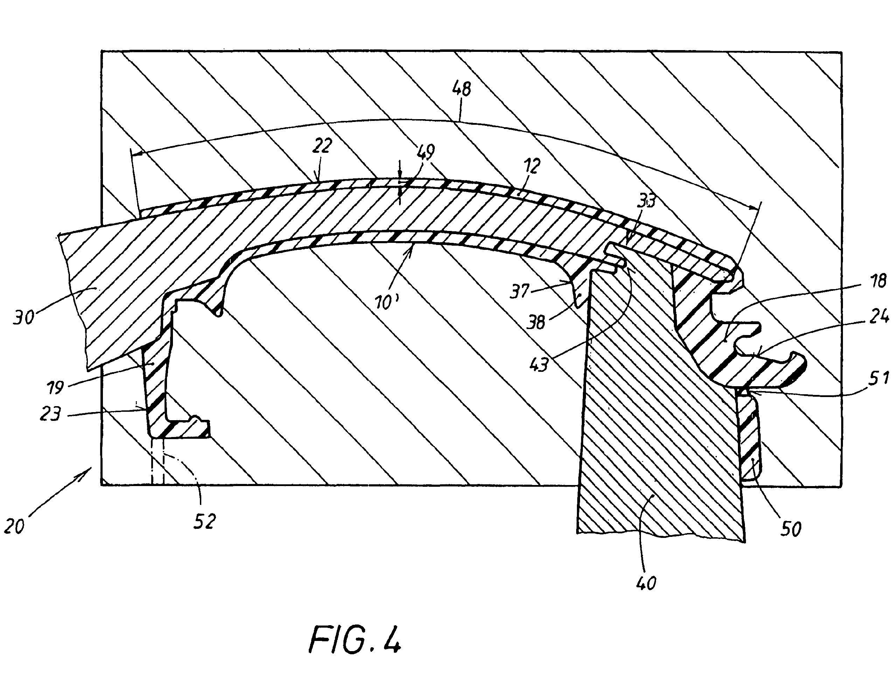

Dann wird, wie Fig. 4 verdeutlicht, eine Gießmasse 50 in die Spritzgussform 20 eingespritzt. Dazu gibt es einen Einführkanal 51, der in den Nebenraum 24 mündet. Alternativ oder zusätzlich kann ein strichpunktiert in Fig. 4 verdeutlichter Einführkanal 52 in den Abzweigraum 23 eintreten. Die Gießmasse gelangt auf diesem Wege natürlich auch in den rohrförmigen Hohlraum 22 und in den Gegen-Nebenraum 37. Dadurch wird im Hohlraum 22 von der Gießmasse 50 das bereits mehrfach erwähnte Rohr 12 erzeugt. Durch den vorerwähnten Kupplungseingriff bei 33, 43 und die dadurch erfolgte exakte Abstützung ergibt sich über die gesamte Rohrlänge 48, welche der ganzen Länge des Griffschafts 11 entspricht, eine definierte Rohrwandstärke 49. Im dargestellten Verfahrensschritt ist diese Wandstärke 49 über die ganze Rohrlänge 48 konstant, weshalb die gefürchteten Einfallstellen im entstehenden Griffschaft sich beim erfindungsgemäßen Verfahren nicht ausbilden können. Dadurch ist das gleichförmige gute Aussehen des fertigen Türgriffs gesichert.

Durch die eingespritzten Gussmassen 50 entstehen gleichzeitig mit dem Rohr 12 der Lageransatz 18 im Nebenraum 24, der Betätigeransatz 19 im Abzweigraum 23 und ein Begrenzungsnocken 38 im Gegen-Nebenraum 37. All diese Teile 19, 18, 38 sind mit dem Rohr 12 einstückig erzeugt, was eine sehr preiswerte Herstellung des Rohlings 10' gewährleistet.

Dann fahren zunächst der Hauptschieber 30 und dann der Hilfsschieber 40 in Gegenrichtung zu den in Fig. 2 beschriebenen beiden Einfahrbewegungen 31, 41 wieder aus der Form 20 heraus. Bei geöffneter Spritzgussform kann dann der Rohling 10' entnommen werden, dessen Aussehen im Längsschnitt aus Fig. 5 zu entnehmen ist. Der gebildete Begrenzungsnocken 38 grenzt, zusammen mit einem dem Betätigeransatz 19 benachbarten Gegennocken 39 den Bereich 53 am Griffschaft 11 ab, der bei Gebrauch des Türgriffs von der Hand des Benutzers erfasst wird.

Ein solcher Rohling 10' ist bereits als einfacher Türgriff verwendbar. Im vorliegenden Fall wird aber der Rohling 10' zu einem "intelligenten Türgriff" vervollkommned, dessen fertiger Zustand in Fig. 9 gezeigt ist. Die dabei ablaufenden Verfahrensschritte sind in den vorausgehenden Fig. 5 bis 8 verdeutlicht. Es wird eine Steuerelektronik 60 im Rohling 10' integriert. Die Steuerelektronik 60 wirkt im Gebrauchsfall des Türgriffs 10 mit einem Schloss und gegebenenfalls mit weiteren Fahrzeugelementen zusammen.

Dazu wird zunächst die vorbereitete Steuerelektronik 60 vom Rohreingang 14 im Sinne des in Fig. 5 gezeigten Pfeils 54 ins Rohrinnere 13 eingesteckt. Von der Steuerelektronik 60 geht mindestens ein mehradriges Kabel 61 aus, welches zweckmäßigerweise in Kontakten 62 endet. Die Einsteckbewegung endet, wenn die Steuerelektronik 60 die in Fig. 6 angedeutete Einstecklage erreicht hat. Dann ragt das Kabel 61 mit seinen Kontakten 62 aus dem Rohrausgang 15 heraus. Die Einstecklage der Steuerelektronik 60 kann durch nicht näher gezeigte Endanschläge im Rohrinneren 13 definiert sein.

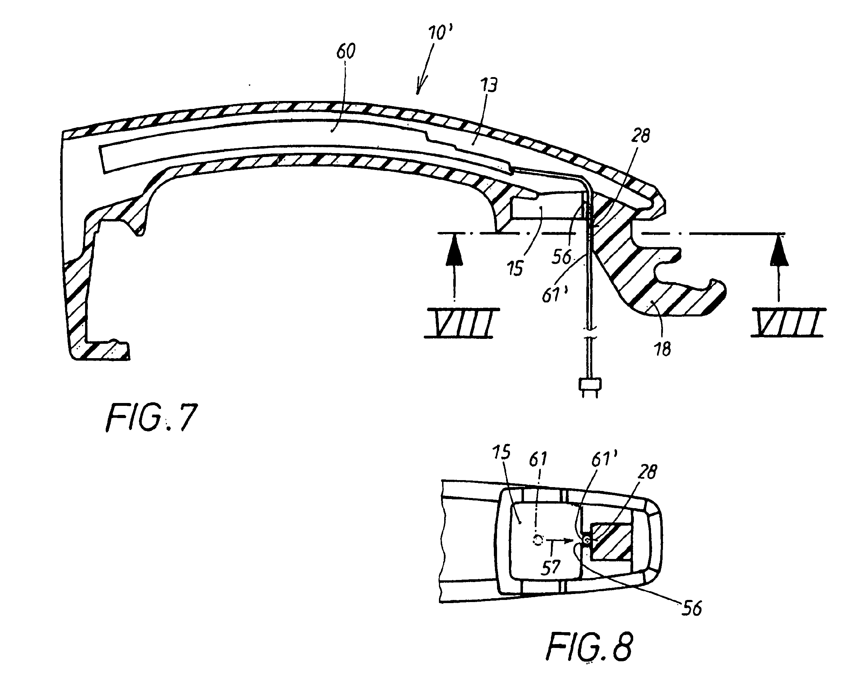

Dann wird, wie Fig. 7 und 8 zeigen, das Kabel 61 in eine definierte Endlage 61' gebracht und in dieser fixiert. Dazu ist die Innenfläche 28 vom Lageransatz mit einer in den Rohrausgang 15 hineinragenden Aufnahme 56 versehen. Diese besteht, wie besonders gut aus Fig. 1 zu erkennen ist, aus einer Nut 56, die von einer geeigneten Profilierung des Hilfsschiebers 40 im Bereich seiner Flanke 46 entsteht. Dazu wird das Kabel 61 im Sinne des Pfeils 57 von Fig. 8 in die Nut 56 eingedrückt, in welcher dann das Kabel in der Endlage 61' clipartig erfasst wird. Das erleichtert die weitere Handhabung beim Verfahren.

In der Schlussphase des erfindungsgemäßen Herstellungsverfahrens wird ins Rohrinnere 31 ein Füllmaterial 55 od. dgl. eingeführt. Dadurch wird die Position der Steuerelektronik 60 und die Endlage 61' des Kabels endgültig gesichert. Die Auffüllung mit Füllmaterial 55 kann soweit erfolgen, dass dabei sowohl der Rohreingang 14 als auch der Rohrausgang 15 geschlossen sind. Zusätzlich oder alternativ könnten der Rohreingang 14 und der Rohrausgang 15 durch nicht näher gezeigte Deckel verschlossen werden.

Nach seiner Fertigstellung gemäß Fig. 9 wird der Türgriff in an sich bekannter Weise an der Tür des Fahrzeugs montiert. Dabei werden die Kontakte 62 am Kabel 61' an zugehörige Gegenkontakte angeschlossen, die am Fahrzeug vorgesehen sind. Der Rohreingang 14 und der Rohrausgang 15 können durch einen nicht näher gezeigten Deckel verschlossen werden. Dies sollte auch dann erfolgen, wenn der Hohlraum 13 vom Türgriff 10 leer bleibt, also keine Steuerelektronik 60 dort eingesetzt wird. Aus Kostengründen genügt es dabei, den Rohreingang 14 nur mit einem Deckel zu verschließen und den Rohrausgang 15 offen zu lassen. Bei Benutzung eines Fahrzeugs, das mit so einem Türgriff 10 ausgerüstet ist, können sich Pfeifgeräusche durch den Fahrtwind ergeben, die sehr störend sind. Aus diesem Grunde kommt es nicht nur darauf an, den Rohreingang 14 durch einen solchen Deckel zu verschließen, sondern den Deckel auch mediendicht mit dem Griffschaft 11 zu verbinden. Das sollte allseitig im Fugenbereich geschehen.

Für diesen mediendichten Abschluss eines Deckels gibt es verschiedene Möglichkeiten, denen jeweils eine eigene Bedeutung zukommt. Eine erste Möglichkeit besteht darin, den Deckel im Türeingang 14 und/oder Türausgang 15 einzukleben. Man verwendet dazu artfremde Werkstoffe bezüglich des Deckels und Griffs. Einfacher erscheint es, das Material vom Deckel und/oder Griff 10 für die mediendichte Verbindung zu verwenden. Das kann z.B. durch Heizschweißen gemäß Anspruch 19 geschehen, wo die thermoplastischen Eigenschaften durch Erwärmung von außen zeitweise verflüssigt werden. Nach dem Erkalten der ineinander geflossenen Materialien ergibt sich die gewünschte Mediendichtigkeit.

Arteigene Materialien des Deckels und Türgriffs 10 lassen sich in vorteilhafterweise auch durch ein Ultraschallschweißen oder ein Reibschweißen bewirken. Eine besondere Bedeutung kommt aber dabei einem Laserschweißen zu, weil beim Lasern oder nachher durch eine Kontrollstrahlung, die auch das Laserlicht selbst sein kann, die Qualität der Schweißnaht überprüft werden kann. Durch eine solche Kontrolle ist dann sichergestellt, dass beim Lasern die gewünschte mediendichte Verbindung zwischen dem Deckel und dem Türgriff am Rohreingang 14 oder Rohreingang 15 erreicht worden ist.

### Bezugszeichenliste:

- 10: Türgriff
- 10': Rohling von 10
- 11: Griffschaft
- 12: Rohr bei 11
- 13: Rohrinneres von 12
- 14: Rohreingang von 12
- 15: Rohrausgang von 12
- 16: erstes Griffende von 10'
- 17: zweites Griffende von 10'
- 18: Lageransatz an 10, 10'
- 19: Betätigeransatz an 10, 10'
- 20: Spritzgussform (Fig. 2 bis 4)
- 21: Kavität in 20 (Fig. 20)
- 22: rohrförmiger Hohlraum in 20 (Fig. 3)
- 23: Abzweigraum für 19 in 20 (Fig. 3)
- 24: Nebenraum für 18 in 20 (Fig. 3)
- 25: Winkel zwischen 14, 15 (Fig. 6)
- 26: Ebene von 15 (Fig. 6)
- 27: Fläche von 29 und 14 (Fig. 6)
- 28: Innenfläche von 18 (Fig. 5)
- 29: Außenkante von 19 (Fig. 6)
- 30: Hauptschieber (Fig. 2 bis 4)
- 31: Pfeil der Einfahrbewegung von 30 (Fig. 2)
- 32: Kopfstück von 30 (Fig. 2)
- 33: Kuppelflächen bei 32 (Fig. 2)
- 34: Verlängerungssteg von 33 (Fig. 2)
- 35: Haltefinger von 33 (Fig. 2)
- 36: Fußstück von 30 (Fig. 3)
- 37: Gegen-Nebenraum für 38 in 20 (Fig. 3)
- 38: Begrenzungsnocken an 53 (Fig. 5)

- 39: Gegennocken bei 53 (Fig. 5)
- 40: Hilfsschieber (Fig. 2 bis 4)
- 41: Pfeil der Einfahrbewegung von 40 (Fig. 2)
- 42: Stirnbereich von 40, Stirnende von 44 (Fig. 2)
- 43: Gegenkuppelflächen bei 42 (Fig. 2)
- 44: Vorsprung von 43 (Fig. 2)
- 45: Hakenöffnung in 44 (Fig. 2)
- 46: eine Flanke von 40 (Fig. 3)
- 47: Gegenflanke an 40 (Fig. 3)
- 48: Rohrlänge von 12 (Fig. 4)
- 49: Rohrwand-Stärke von 12 (Fig. 4)
- 50: Gießmasse, Kunststoff (Fig. 4)
- 51: Einführkanal für 50 (Fig. 4)
- 52: weiterer Einführkanal für 50 (Fig. 4)
- 53: Nutzungsbereich von 11 (Fig. 4)
- 54: Einsteckbewegung von 60 (Fig. 5)
- 55: Füllmaterial in 13 (Fig. 9)
- 56: Aufnahme für 61 an 28, Nut (Fig. 7, 8)
- 57: Pfeil der Eindrückbewegung von 61 in 56 (Fig. 8)

- 60: Steuerelektronik (Fig. 5 bis 7)
- 61: Kabel an 60 (Fig. 5, 6)
- 61': Endlage von 61 (Fig. 7 bis 9)
- 62: Kontaktende von 61 (Fig. 5 bis 7)

## Patentansprüche

1. Verfahren zum Herstellen eines hohlen Türgriffs (10) für Fahrzeuge,
mit einem vom Benutzer zu erfassenden Türschaft (11),
mit einem zur Lagerung des Türgriffs (10) an der Tür dienenden Lageransatz (18) an dem einen Griffende (16)
und mit einem zur Betätigung eines Schlosses dienenden Betätigeransatz (19) an dem anderen Griffende (16)
wobei der Griffschaft (11) als ein Rohr (12) ausgebildet wird,
dessen Rohrinneres (13) einerends durch einen Rohreingang (14) und anderends durch einen dazu abgewinkelt (25) verlaufenden Rohrausgang (15) zugänglich ist,
**dadurch gekennzeichnet,**
**dass** zunächst ein entsprechend dem Verlauf des Griffschafts (11) gekrümmter Hauptschieber (30) in eine Kavität (21) einer Spritzgussform (20) eingefahren (31) wird, wo ein rohrförmiger Hohlraum (22) erzeugt wird,
**dass** der eingefahrene Hauptschieber (30) mit seinem Fußstück (36) einen Abzweigraum (23) mit einem negativen Betätigeransatz-Profil (19) in der Spritzgussform (20) begrenzt und an seinem Kopfstück (32) Kuppelflächen (33) besitzt,
**dass** ein Hilfsschieber (40) in seinem Stirnbereich (42) Gegenkuppelflächen (43) aufweist, mit denen er in Richtung der Kuppelflächen (33) des Hauptschiebers (30) einfährt (41)
und dabei mit seiner einen Flanke (46) einen Nebenraum (24) in der Spritzgussform (20) begrenzt, welcher das negative Profil des Lageransatzes (18) hat,
**dass** beim Einfahren (31, 41) der beiden Schieber (30, 40) die Kuppelflächen (33) mit den Gegenkuppelflächen (43) in Eingriff kommen,
**dass** dann eine Gießmasse (50) in den rohrförmigen Hohlraum (22), den Nebenraum (24) und den Abzweigraum (23) eingespritzt wird
und dabei der Hauptschieber (30) vom Hilfsschieber (40) formschlüssig gehalten und derart lagegerecht im Hohlraum (22) abgestützt wird,
**dass** dort das Rohr (12) mit einer über die ganze Griffschaft-Länge (48) definierte Rohrwand-Stärke (49) geformt wird,
während gleichzeitig im Nebenraum (24) der Lageransatz (18) und im Abzweigraum (23) der Betätigeransatz (19) erzeugt werden und mit dem Rohr (12) einstückig sind.

2. Verfahren nach Anspruch 1, **dadurch gekennzeichnet, dass** die Kuppelflächen (33) in Einfahrrichtung (31) des Hauptschiebers (30) geöffnet sind,
während die Gegenkuppelfläche (43) in Bewegungsrichtung (41) des Hilfsschiebers (40) hinterschnitten (45) sind.

3. Verfahren nach Anspruch 1 oder 2, **dadurch gekennzeichnet, dass** die Kuppelflächen (33) eines in Einfahrrichtung (31) des Hauptschiebers (30) weiterlaufenden Verlängerungssteg (34) und andererseits aus einem dazu parallelen, kurzen Haltefinger (35) gebildet werden,
dass die Gegenkuppelflächen (43) zwar aus einem in Einschubrichtung (41) des Hilfsschiebers (40) weisenden Vorsprung (44) mit Hakenprofil erzeugt sind,
die Hakenöffnung (45) aber quer dazu verläuft und zur Einfahrbewegung (31) des Hauptschiebers (30) hin geöffnet ist,
und dass beim Einfahren (31; 41) des Haupt- und Hilfsschiebers (30; 40) zunächst der Vorsprung (44) mit seinem Stirnende (42) an den Verlängerungssteg (34) stößt und dann der Haltefinger (35) in die Hakenöffnung (45) eindringt.

4. Verfahren nach einem oder mehreren der Ansprüche 1 bis 3, **dadurch gekennzeichnet, dass** nach dem Eingriff der Kuppelfläche (33) in die Gegenkuppelflächen (43) der eingefahrene Hilfsschieber (40) solange nicht rückbewegt wird, bis der Hauptschieber (30) seine Einfahrposition verlassen hat.

5. Verfahren nach einem oder mehreren der Ansprüche 1 bis 4, **dadurch gekennzeichnet, dass** die Gießmasse (50) nur im Bereich des den Lageransatz (18) formenden Nebenraums (24) und/oder des den Betätigeransatz (19) erzeugenden Abzweigraums (23) in die Spritzgussform (20) eintreten und
dann, vom Nebenraum (24) und/oder Abzweigraum (23) aus, in den rohrförmigen Hohlraum (22) der Spritzgussform (20) weiterfließen.

6. Verfahren nach einem oder mehreren der Ansprüche 1 bis 5, **dadurch gekennzeichnet, dass** nach dem Formen des Rohrs (12) mit integriertem Lager- und Betätigereinsatz (18, 19) die beiden Schieber (40, 30) zurückgezogen werden und der Formling (10') der Spritzgussform (20) entnommen wird,
dass dann eine Steuerelektronik (60) für das Schloss und gegebenenfalls für weitere Fahrzeugelemente durch den Rohreingang (14) am Betätigeransatz (19) so weit ins Rohrinnere (13) eingesteckt (54) werden,
bis ein an die Steuerelektronik (60) angeschlossenes Kabel (61) aus dem Rohrausgang (15) neben dem Lageransatz (18) herausragt,
und dass dann der Türgriff (10) mit seinem Lager- und Betätigeransatz (18, 19) an der Tür montiert und das herausragende Kabelende (62) an Gegenkontakte im Fahrzeug angeschlossen wird.

7. Verfahren nach einem oder mehreren der Ansprüche 1 bis 6, **dadurch gekennzeichnet, dass** in der Spritzgussform (20) der Rohreingang (14) im wesentlichen in der gleichen Fläche (27), wie die Außenkante (29) vom Betätigeransatz (19) sich befindet.

8. Verfahren nach einem oder mehreren der Ansprüche 1 bis 7, **dadurch gekennzeichnet, dass** im Einfahrfall (41) eine Gegenflanke (47) vom Hilfsschieber (40) und der daran angrenzende Bereich des Hauptschiebers (30) einen den Nebenraum (24) gegenüberliegenden Gegen-Nebenraum (37) in der Spritzgussform (20) begrenzen,
dass beim Einspritzen der Gießmasse (50) ein Begrenzungsnocken im Gegen-Nebenraum (37) geformt wird
und dass der Begrenzungsnocken (38) auf der dem Lageransatz (18) gegenüberliegenden Seite am Rohrausgang (15) positioniert wird,
wobei der Begrenzungsnocken (38) beim späteren Gebrauch des Griffschafts (11) den vom Benutzer zu erfassenden Bereich (53) des Rohres (12) begrenzt.

9. Verfahren nach einem oder mehreren der Ansprüche 1 bis 8, **dadurch gekennzeichnet, dass** nach dem Einstecken (54) der Steuerelektronik (60) sowohl der Rohreingang (14) als auch der Rohrausgang (15) verschlossen werden,
wobei die an der Steuerelektronik (60) angeschlossenen Kabel (61) seitlich aus dem geschlossenen Rohrausgang (15) herausragen (61').

10. Verfahren nach Anspruch 9, **dadurch gekennzeichnet, dass** zum Verschließen des Rohreingangs (14) und/oder des Rohrausgangs (15) ein Füllmaterial verwendet wird, welches ins Rohrinnere (13) eingebracht wird.

11. Verfahren nach einem oder mehreren der Ansprüche 1 bis 10, **dadurch gekennzeichnet, dass** die Gegenfläche (28) vom Lageransatz (18) in den Rohrausgang (15) hineinragt
und dass beim Spritzgießen an der Innenfläche (28) eine Aufnahme (56) angeformt wird,
die zur späteren Positionierung (61') des an der Steuerelektronik (60) angeschlossenen Kabels (60) dient.

12. Verfahren nach Anspruch 11, **dadurch gekennzeichnet, dass** das Kabel (61') von der Aufnahme (56) clipartig festgehalten wird.

13. Verfahren nach Anspruch 11 oder 12, **dadurch gekennzeichnet, dass** der Hilfsschieber (40) an seiner dem Nebenraum (24) zugekehrten Flanke (46) ein zur Kabelaufnahme negatives Profil trägt
und dass beim Spritzgießen in diesem Profil eine als Aufnahme fungierende Nut (56) entsteht, die in Einfahrrichtung (41) des Hilfsschiebers (40) gerichtet ist.

14. Verfahren nach einem oder mehreren der Ansprüche 1 bis 10, **dadurch gekennzeichnet, dass** der Rohreingang (14) und/oder der Rohrausgang (15) mittels eines Deckels verschlossen werden.

15. Verfahren nach Anspruch 14, **dadurch gekennzeichnet, dass** nach Herstellung des Türgriffs (10) der Hohlraum (13) stets frei bleibt, aber mindestens der Rohreingang (14) von einem Deckel verschlossen wird.

16. Verfahren nach Anspruch 14 oder 15, **dadurch gekennzeichnet, dass** der Deckel durch Laserschweißen mediendicht den Rohreingang (14) und/oder den Rohrausgang (15) verschließt.

17. Verfahren nach Anspruch 14 oder 15, **dadurch gekennzeichnet, dass** der Deckel durch Reibschweißen mediendicht den Rohreingang (14) und/oder den Rohrausgang (15) verschließt.

18. Verfahren nach Anspruch 14 oder 15, **dadurch gekennzeichnet, dass** der Deckel durch Ultraschallschweißen mediendicht den Rohreingang (14) und/oder den Rohrausgang (15) verschließt.

19. Verfahren nach Anspruch 14 oder 15, **dadurch gekennzeichnet, dass** der Deckel durch Erhitzen des schweißfähigen Materials vom Türgriff (10) und vom Deckel mediendicht den Rohreingang (14) und/oder den Rohrausgang (15) verschließt.

20. Verfahren nach Anspruch 14 oder 15, **dadurch gekennzeichnet, dass** der Deckel durch Kleben mediendicht den Rohreingang (14) und/oder den Rohrausgang (15) verschließt.

## Claims

1. Method for producing a hollow door handle assembly (10) for vehicles,
with a door handle (11) to be gripped by the user,
with a bearing support (18) on one handle end (16) for supporting the door handle assembly (10)
and with an actuator contact (19) on the other handle end (16) for actuating a lock
with the door handle (11) being formed as a tube (12),
the inside (13) of the tube being accessible at one end through a tube inlet (14) and at the other end by a tube outlet (15) appropriately bent (25) towards it
**characterized in that**
first a main sliding piece (30), curved corresponding to the shape of the door handle (11) is inserted into a cavity (21) of an injection mold (20), where a tubular cavity (22) is created,
that the footpiece (36) of the inserted main sliding piece (30) borders a branch space (23) with a negative actuating contact profile (19) in the injection mold (20) and has coupling surfaces (33) on its head piece (32),
that a secondary sliding piece (40) has counter supporting surfaces (43) at its front end (42) with which it enters (41) in the direction of the coupling surfaces (33) of the main sliding piece (30)
and in doing so its edge (46) borders a secondary space (24) in the injection mold (20) that has the negative profile of the bearing support (18),
that when both sliding pieces (30, 40) are being entered (31, 42) the coupling surfaces (33) engage with the counter coupling surfaces (43),
that a casting compound (50) is injection into the tubular cavity (22), the secondary space (24) and the branch space (23),
and by doing so the main sliding piece (30) is held by the secondary sliding piece (40) with a form fit and is supported in the correct position in the cavity (22) in such a way
that, there, the tube (12) is shaped over the complete handle length (48) due to the thickness (49) of the tube,
with the bearing support (18) being created in the secondary space (24) and the actuator contact (19) being generated in the branch space (23) concomitantly and with the tube (12) being one piece.

2. Method in accordance with claim 1, **characterized in that** the coupling surfaces (33) are open in the insertion direction (31) of the main sliding piece (30),
with the counter coupling surface (43) being undercut (45) in the movement direction (41) of the secondary sliding piece (40).

3. Method in accordance with claim 1 or 2, **characterized in that** the coupling surfaces (33) are formed from an extension web (34) extending in the insertion direction (31) of the main sliding piece (30) and from a short retaining finger (35), parallel to it, on the other side,
that the counter coupling surfaces (43) are formed with a projection (44) with a hook profile pointing in the insertion direction (41) of the secondary sliding piece (40),
that the hook opening (45), however, runs transverse to this and is open towards the insertion movement (31) of the main sliding piece (30),
and that during insertion (31; 41) of the main and secondary sliding pieces (30;40), the front end (42) of the projection (44) first strikes the extension web (34) and the retaining finger (35) then penetrates into the hook opening (45).

4. Method in accordance with one or more of claims 1 to 3, **characterized in that** after engagement of the coupling surface (33) in the counter coupling surfaces (43) the inserted auxiliary sliding piece (40) is not moved backwards until the main sliding piece (30) has left its inserted position.

5. Method in accordance with one or more of claims 1 to 4, **characterized in that** the casting compound (50) enters into only the secondary space (24) formed in the area of the bearing support (18) and/or of the branch space (23) creating the actuator contact (19) in the injection mold (20) and
then, flows, from the secondary space (24) and/or branch space (23), into the tubular cavity (22) of the injection mold (20).

6. Method in accordance with one or more of claims 1 to 5, **characterized in that** after the shaping of the tube (12)with the integral bearing and actuator insert (18, 19), both sliding pieces (40,30) are withdrawn and the briquette (10') is removed from the injection mold (20),
that then an electronic controller (60) for the lock and, if necessary, for other vehicle elements, is inserted (54) through the tube inlet (14) on the actuator contact (19) so far in to the tube (14)
that a cable (61) connected to the electronic controller (60) projects out of the tube outlet (15) next to the bearing support (18),
and that the door handle assembly (10), with its bearing support and actuator contact (18, 19,) is mounted on the door and the projecting cable end (62) is connected to counter contacts in the vehicle.

7. Method in accordance with one or more of claims 1 to 6, **characterized in that** the tube inlet (14) in the injection mold (20) is essentially in the same surface (27) as the outer edge (29) of the actuator contact (19).

8. Method in accordance with one or more of claims 1 to 7, **characterized in that** in the inserted case (41) a counter edge (47) of the secondary sliding piece (40) and the adjoining area of the main sliding piece (30) border a counter secondary space (37) in the injection mold (20) opposite the secondary space (24),
that when the casting compound (50) is injected a limiting cam is formed in the counter secondary space (37)and that the limiting cam (38)is positioned on the side of the tube outlet (15) opposite the bearing support (18),
with the limiting cam (38) limiting the area (53) of the tube (12) to be grasped by the user on subsequent use of the handle (11).

9. Method in accordance with one or more of claims 1 to 8, **characterized in that** after insertion (54) of the electronic controller (60) both the tube inlet (14) and the tube outlet (15) are closed,
with the cable (61) connected to the electronic controller (60) projecting (61') out of the closed tube outlet (15).

10. Method in accordance with claim 9, **characterized in that** a filling material, that is placed inside the tube (13), is used to close the tube inlet (14) and/or tube outlet (15).

11. Method in accordance with one or more of claims 1 to 10, **characterized in that** the counter surface (28) of the bearing support (18) projects into the tube outlet (15)
and that during the injection molding a receptacle (56) is formed on the inner surface (28),
that is used for subsequent positioning (61') of the cable (60) connected to the electronic controller (60).

12. Method in accordance with claim 11, **characterized in that** the cable (61') is held in the manner of a clip by the receptacle (56).

13. Method in accordance with claim 11 or 12, **characterized in that** the auxiliary sliding piece (40) has a negative profile with respect to the cable receptacle on the edge (46) facing towards the secondary space (24)
and that during injection molding a groove (56) functioning as a receptacle is formed in this profile, that is aligned in the insertion direction (41) of the auxiliary sliding piece (40).

14. Method in accordance with one or more of claims 1 to 10, **characterized in that** the tube inlet (14) and/or the tube outlet (15) is closed by means of a cover.

15. Method in accordance with claim 14, **characterized in that** after production of the door handle assembly (10) the cavity (13) always remains clear but at least the tube inlet (14) is closed by a cover.

16. Method in accordance with claim 14 or 15, **characterized in that** the cover closes the tube inlet (14) and/or the tube outlet (15) by means of laser welding to form a media-tight seal.

17. Method in accordance with claim 14 or 15, **characterized in that** the cover seals the tube inlet (14) and/or the tube outlet (15) by means of friction welding to form a media-tight seal.

18. Method in accordance with claim 14 or 15, **characterized in that** the cover seals the tube inlet (14) and/or tube outlet (15) by ultrasound welding to form a media-tight seal.

19. Method in accordance with claim 14 or 15, **characterized in that** the cover seals the tube inlet (14) and/or the tube outlet (15) from the door handle (10) and the cover, by heating the weldable material to form a media-tight seal.

20. Method in accordance with claim 14 or 15, **characterized in that** the cover closes the tube inlet (14) and/or the tube outlet (15) by bonding to form a media-tight seal.

## Revendications

1. Procédé pour fabriquer une poignée de portière (10) creuse pour des véhicules,
avec une tige de portière (11) à saisir par l'utilisateur,
avec un appendice de palier (18), servant au montage en palier de la poignée de portière (10) sur la portière, l'appendice étant situé sur une extrémité de saisie (16),
et avec un appendice d'actionneur (19), servant à l'actionnement d'une serrure, situé sur l'autre extrémité de saisie (16),
la tige de saisie (11) étant réalisée sous la forme d'un tube (12),
dont l'intérieur de tube (13) est à une extrémité accessible à une entrée de tube (14) et, à l'autre extrémité est accessible par une sortie de tube (15) s'étendant sous un certain angle (25) par rapport à celle-ci,
**caractérisé en ce que**,
d'abord, un coulisseau principal (30), incurvé de manière correspondante à l'allure de la tige de saisie (11), est inséré (31) dans une cavité (21) d'un moule de moulage par injection (20), dans lequel est produit un espace creux (22) de forme tubulaire,
**en ce que** le coulisseau principal (30) inséré par sa pièce de pied (36) délimite dans le moule de moulage par injection (20) un espace de ramification (23) ayant un profil d'appendice d'actionneur (19) en négatif, et comprend des faces de calotte (33) sur sa pièce de tête (32),
**en ce qu'**un coulisseau auxiliaire (40) présente, dans sa zone frontale (42), des faces de calotte conjuguées (43), à l'aide desquelles il pénètre (41) dans la direction des faces de calotte (33) du coulisseau principal (30),
et alors, par un de ses flancs (46), délimite, dans le moule de moulage par injection (20), un espace annexe (24) qui présente le profil en négatif de l'appendice de palier (18),
**en ce que** lors de l'insertion (31, 41) des deux coulisseaux (30, 40), les faces de calotte (33) viennent en prise avec les faces de calotte conjuguées (43),
**en ce qu'**ensuite, une masse de coulée (50) est injectée, dans l'espace creux (22) tubulaire, l'espace annexe (24) et l'espace de ramification (23),
et alors le coulisseau principal (30) est maintenu, par une liaison par ajustement de forme, par le coulisseau auxiliaire (40), et soutenu de cette manière en position correcte dans l'espace creux (22),
**en ce que**, à cet endroit, le tube (12) est formé avec une épaisseur de paroi tubulaire (49) définie sur la totalité de la longueur (48) de la tige de saisie,
tandis que, simultanément, dans l'espace annexe (24), l'appendice de palier (18) et, dans l'espace de ramification (23), l'appendice d'actionneur (19) sont produits et réalisés d'une seule pièce avec le tube (12).

2. Procédé selon la revendication 1, **caractérisé en ce que** les faces de calotte (33) sont ouvertes dans la direction de pénétration (31) du coulisseau principal (30),
tandis que les faces de calotte conjuguées (43) sont l'objet de contre-dépouille (45) dans la direction de déplacement (41) du coulisseau auxiliaire (40).

3. Procédé selon la revendication 1 ou 2, **caractérisé en ce que** les faces de calotte (33) sont formées, d'une part, d'une nervure de prolongement (34), assurant une continuation dans la direction de pénétration (31) du coulisseau principal (30) et, d'autre part, d'un doigt de maintien (35) court lui étant parallèle,
**en ce que** les faces de calotte conjuguées (43) sont formées, précisément, d'une saillie (44), ayant un profil en crochet, tourné dans la direction d'insertion (41) du coulisseau auxiliaire (40),
l'ouverture en crochet (45) s'étendant cependant transversalement par rapport celle-ci et étant ouverte par rapport à la direction de pénétration (31) du coulisseau principal (30),
et **en ce que**, lors de la pénétration (31 ; 41) du coulisseau principal et auxiliaire (30 ; 40), d'abord la saillie (44) vient toucher, par son extrémité frontale (42), la nervure de prolongement (34) et, ensuite, le doigt de maintien (35) pénètre dans l'ouverture en crochet (45).

4. Procédé selon l'une ou plusieurs des revendications 1 à 3, **caractérisé en ce que**, après engagement de la face de calotte (33) dans les faces de calotte conjuguées (43), le coulisseau auxiliaire (40) introduit n'est pas rétracté tant que le coulisseau principal (30) n'a pas quitté sa position de pénétration.

5. Procédé selon l'une ou plusieurs des revendications 1 à 4, **caractérisé en ce que** la masse de coulée (50) ne pénètre que dans la zone de l'espace annexe (24) formant l'appendice de palier (18) et/ou de l'espace de ramification (23) produisant l'appendice d'actionneur (19), dans le moule de moulage par injection (20) et,
ensuite, continue à s'écouler de l'espace annexe (24) et/ou de l'espace de ramification (23), pour pénétrer dans l'espace creux (22) à forme annulaire du moule de moulage par injection (20).

6. Procédé selon l'une ou plusieurs des revendications 1 à 5, **caractérisé en ce que**, après le formage du tube (12) avec un insert de palier et d'actionneur (18, 19) intégré, les deux coulisseaux (40, 30) sont rétractés et l'ébauche (10') est prélevée hors du moule de moulage par injection (20),
**en ce que**, ensuite, une électronique de commande (60), pour la serrure et, le cas échéant, une pour d'autres éléments du véhicule, sont enfichés (54), en passant par l'entrée tubulaire (14), sur l'appendice d'actionneur (19), dans l'intérieur de tube (13), jusqu'à ce qu'
un câble (61), raccordé à l'électronique de commande (60), ressorte de la sortie tubulaire (15) à côté de l'appendice de palier (18),
et **en ce que**, ensuite, la poignée de portière (10) est montée, avec son appendice de palier d'actionneur (18, 19), sur la portière et l'extrémité de câble (62) ressortant est raccordée à des contacts conjugués, se trouvant dans le véhicule.

7. Procédé selon l'une ou plusieurs des revendications 1 à 6, **caractérisé en ce que**, dans le moule de moulage par injection (20), l'entrée tubulaire (14) se trouve sensiblement dans la même face (27) que celle où se trouve le bord extérieur (29) de l'appendice d'actionneur (19).

8. Procédé selon l'une ou plusieurs des revendications 1 à 7, **caractérisé en ce que**, en cas de pénétration (41), un flanc conjugué (47) du coulisseau auxiliaire (40) et la zone, y étant limitrophe, du coulisseau principal (30) délimitent, dans le moule de moulage par injection (20), un espace annexe conjugué (37) opposé à l'espace annexe (24),
**en ce que**, lors de l'injection de la masse de coulée (50), une came de limitation est formée dans l'espace annexe conjugué (37),
et **en ce que** la came de limitation (38) est positionnée, sur la face, opposée à l'appendice de palier (18), sur la sortie tubulaire (15),
sachant que la came de limitation (38), lors de l'utilisation ultérieure de la tige de saisie (11), limite la zone (53), à saisir par l'utilisateur, du tube (12).

9. Procédé selon l'une ou plusieurs des revendications 1 à 8, **caractérisé en ce que**, après enfichage (54) de l'électronique de commande (60), tant l'entrée tubulaire (14) qu'également la sortie tubulaire (15) sont fermées,
sachant que les câbles (61) raccordés à l'électronique de commande (60) ressortent (61') latéralement de la sortie tubulaire (15) fermée.

10. Procédé selon la revendication 9, **caractérisé en ce que**, pour fermer l'entrée tubulaire (14) et/ou la sortie tubulaire (15), est utilisé un matériau de remplissage, introduit dans l'intérieur de tube (13).

11. Procédé selon l'une ou plusieurs des revendications 1 à 10, **caractérisé en ce que** la face conjuguée (28) de l'appendice de palier (18) pénètre dans la sortie tubulaire (15),
et **en ce que**, lors du moulage par injection, un logement (56) est formé d'un seul tenant sur la face intérieure (28),
le logement servant au positionnement (61') ultérieur du câble (61) raccordé à l'électronique de commande (60),

12. Procédé selon la revendication 11, **caractérisé en ce que** le câble (61') est maintenu fixé à la façon d'une attache par le logement (56).

13. Procédé selon la revendication 11 ou 12, **caractérisé en ce que** le coulisseau auxiliaire (40) porte, sur son flanc (46) tourné vers l'espace annexe (24), un profil qui est le négatif du logement de câble,
et **en ce que**, lors du moulage par injection, dans ce profil est créée une rainure (56), servant de logement et tournée dans la direction d'insertion (41) du coulisseau auxiliaire (40).

14. Procédé selon l'une ou plusieurs des revendications 1 à 10, **caractérisé en ce que** l'entrée tubulaire (14) et/ou la sortie tubulaire (15) est/sont fermée(s) au moyen d'un couvercle.

15. Procédé selon la revendication 14, **caractérisé en ce que**, après fabrication de la poignée de portière (10), l'espace creux (13) reste en permanence libre, mais au moins l'entrée tubulaire (14) est fermée par un couvercle.

16. Procédé selon la revendication 14 ou 15, **caractérisé en ce que** le couvercle, par un soudage au laser, ferme, de façon étanche aux fluides, l'entrée tubulaire (14) et/ou la sortie tubulaire (15).

17. Procédé selon la revendication 14 ou 15, **caractérisé en ce que** le couvercle, par soudage par friction, ferme, de façon étanche aux fluides, l'entrée tubulaire (14) et/ou la sortie tubulaire (15).

18. Procédé selon la revendication 14 ou 15, **caractérisé en ce que** le couvercle, par soudage aux ultrasons, ferme, de façon étanche aux fluides, l'entrée tubulaire (14) et/ou la sortie tubulaire (15).

19. Procédé selon la revendication 14 ou 15, **caractérisé en ce que** le couvercle, par chauffage du matériau soudable de la poignée de portière (10) et du couvercle, ferme, de façon étanche aux fluides, l'entrée tubulaire (14) et/ou la sortie tubulaire (15).

20. Procédé selon la revendication 14 ou 15, **caractérisé en ce que** le couvercle, par collage, ferme, de façon étanche aux fluides, l'entrée tubulaire (14) et/ou la sortie tubulaire (15).
